# EUROPÄISCHE PATENTSCHRIFT

(11) **EP 2 007 985 B1**
(45) Veröffentlichungstag und Bekanntmachung des Hinweises auf die Patenterteilung: **11.08.2010**
(21) Anmeldenummer: 07704513.6
(22) Anmeldetag: 12.02.2007
(51) Int. Cl.: F04B 1/04, F04B 1/053, F04B 17/03, F04B 53/16

(54) **PUMPE, INSBESONDERE FÜR EIN HYDRAULIKAGGREGAT**
PUMP, PARTICULARLY FOR A HYDRAULIC UNIT
POMPE, EN PARTICULIER POUR UN AGRÉGAT HYDRAULIQUE

(30) Priorität: 11.04.2006 DE 102006016897
(43) Veröffentlichungstag der Anmeldung: 31.12.2008
(73) Patentinhaber: Robert Bosch GmbH, 70442 Stuttgart (DE)
(72) Erfinder: STOTZ, Rolf, 71665 Vaihingen (DE); KARL, Martin, 71732 Tamm (DE)
(86) Internationale Anmeldenummer: PCT/EP2007/051334
(87) Internationale Veröffentlichungsnummer: WO 2007/118722

(56) Entgegenhaltungen:
- WO-A-2004/029453
- DE-A1- 10 063 757
- DE-A1- 10 140 918
- DE-A1- 19 635 164

## Beschreibung

### Stand der Technik

Die Erfindung geht aus von einer Pumpe, insbesondere für ein Hydraulikaggregat, nach der Gattung des unabhängigen Patentanspruchs 1. Derartige Pumpen sind mit Ausgleichsmitteln ausgestattet, welche einen Exzenterraum eines Exzenterlagers vergrößern um eventuell anfallende Leckagflüssigkeit aus den Pumpenelementen aufzunehmen und über Leckage abführende Kanäle aus dem Inneren des Hydraulikaggregat zu entfernen. Derartige Pumpen sind beispielsweise aus der DE 101 40 918 A1, aus der WO 2004/029453 A oder aus der DE 196 35 164 A1 bereits bekannt.

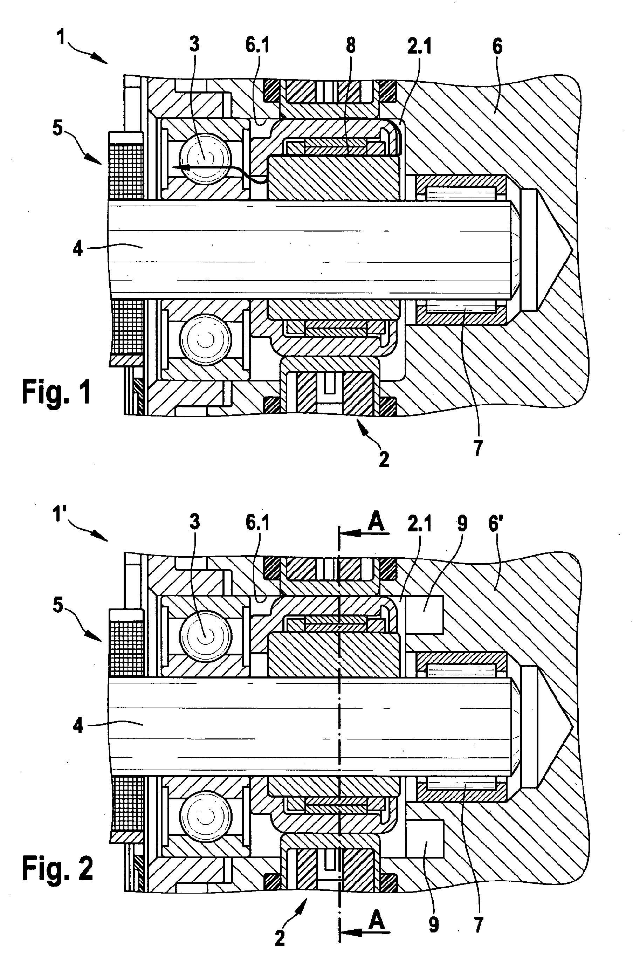

Eine Pumpe, insbesondere für ein Hydraulikaggregat, die allerdings ohne derartige Ausgleichsmittel auskommt, ist ferner in Figur 1 dargestellt. Wie aus Figur 1 ersichtlich ist, umfasst die herkömmliche Pumpe 1 ein Exzenterlager 2, ein Antriebslager 3, eine Antriebswelle 4, einen elektrischen Antriebsmotor 5, ein Pumpengehäuse 6 mit einer Motorbohrung 6.1 und ein Antriebswellenlager 7. Wenn die Pumpe 1 als Teil eines ABS-Systems und/oder eines ESP-Systems ausgeführt ist, können während des Pumpenbetriebes aufgrund einer durch enge Spalten in einem Exzenterraum 2.1 verursachten Kapillarwirkung geringe Mengen an Bremsflüssigkeit aus den Pumpenelementen austreten und direkt in das Exzenterlager 2 eindringen. Die in das Exzenterlager 2 eingetretene Bremsflüssigkeit kann über das Antriebslager 3 weiter in den elektrischen Antriebsmotor 5 transportiert werden. Dieser Leckagepfad der Bremsflüssigkeit ist in Fig. 1 als Pfeil 8 dargestellt. Zudem verhindert die o.g. Kapillarwirkung das Ablaufen der Bremsflüssigkeit in eventuell vorhandene Leckagetaschen.

Ein Eindringen von Bremsflüssigkeit in den elektrischen Antriebsmotor 5 kann zu erhöhten Stromwerten bzw. verminderten Bürstenablauf führen. Im Extremfall kann durch die eindringende Bremsflüssigkeit im elektrischen Antriebsmotor 5 ein Kurzschluss und damit einen Ausfall des elektrischen Antriebsmotors 5 verursacht werden. Ein Eindringen von Bremsflüssigkeit in das Exzenterlager 2 und/oder das Antriebslager 3 kann zum Auswaschen des Fettes und daraus resultierend zu erhöhtem Verschleiß führen.

### Offenbarung der Erfindung

Die erfindungsgemäße Pumpe mit den Merkmalen des unabhängigen Patentanspruchs 1 hat demgegenüber den Vorteil, dass ein Exzenterraum eines Exzenterlagers durch Ausgleichsmittel vergrößert wird, welche in ein Pumpengehäuse eingebracht werden. Die Ausgleichsmittel verhindern bzw. erschweren eine Kapillarwirkung zwischen dem Exzenterraum und dem Exzenterlager, d.h. die erfindungsgemäßen Ausgleichsmittel unterbrechen in vorteilhafter Weise einen Übertragungspfad für eine Leckageflüssigkeit vom Exzenterraum in einen elektrischen Antriebsmotor der Pumpe. Durch die Ausgleichsmittel werden in vorteilhafter Weise enge Spalten im Exzenterraum vermieden, so dass die Gefahr der Kapillarwirkung reduziert werden kann und ein Eindringen von Flüssigkeit vom Exzenterraum ins Exzenterlager nahezu vollständig verhindert werden kann.
Die Ausgleichsmittel sind als Ringnut ausgeführt, welche einfach in das Pumpengehäuse eingebracht werden kann. Die als Ringnut ausgeführten Ausgleichsmittel erfordern keinen weiteren Bauraum, so dass keine weiteren Veränderungen im Pumpengehäuse, beispielsweise im Bezug auf die Anordnung eines Antriebswellenlager erforderlich sind, welches ein generelles Tiefersetzen der Motorbohrung zur Vergrößerung des Exzenterraums verhindert. Durch die Ausgleichsmittel wird eine Unterbrechung eines Leckagepfads einer Leckageflüssigkeit zwischen dem Exzenterraum und dem elektrischen Antriebsmotor und ein Ablaufen der Leckageflüssigkeit in ein Leckagereservoir bewirkt. Dieses Leckagereservoir ist am Boden einer Motorbohrung im Pumpengehäuse angeordnet.

Durch die in den abhängigen Ansprüchen aufgeführten Maßnahmen und Weiterbildungen sind vorteilhafte Verbesserungen der im unabhängigen Patentanspruch angegebenen Pumpe möglich.

Der Querschnitt der Ringnut kann beispielsweise eckig oder rund ausgeführt werden.

Die erfindungsgemäße Pumpe kann beispielsweise in einem Hydraulikaggregat eines ABS-Systems (Antiblockiersystems) und/oder eines ESP-Systems (Elektronischen Stabilitätsprogrammsystems) verwendet werden.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt.

### Kurze Beschreibung der Zeichnungen

Fig. 1 zeigt einen Längsschnitt eines Ausschnitts einer herkömmlichen Pumpe für ein Hydraulikaggregat.
Fig. 2 zeigt einen Längsschnitt eines Ausschnitts einer erfindungsgemäßen Pumpe für ein Hydraulikaggregat.
Fig. 3 zeigt einen Querschnitt der erfindungsgemäßen Pumpe entlang der Linie A-A aus Fig. 2.

### Ausführungsform(en) der Erfindung

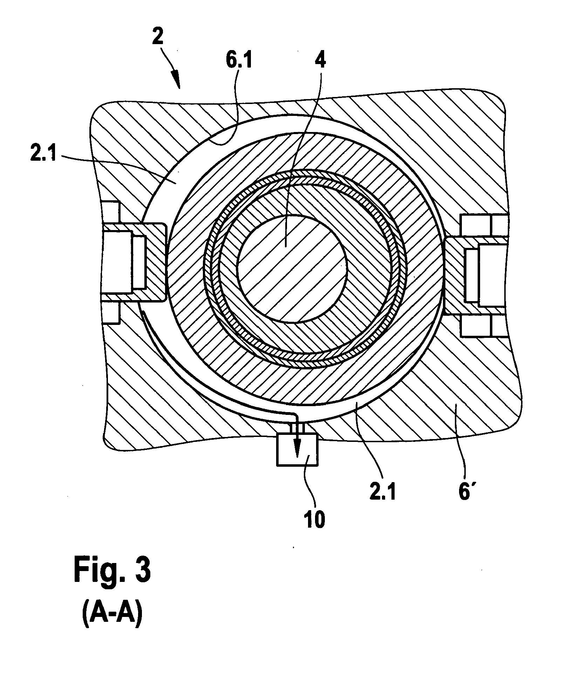

Wie aus Fig. 2 und 3 ersichtlich ist, umfasst eine erfindungsgemäße Pumpe 1' analog zur herkömmlichen Pumpe 1 gemäß Fig. 1 ein Exzenterlager 2, ein Antriebslager 3, eine Antriebswelle 4, einen elektrischen Antriebsmotor 5 und ein Pumpengehäuse 6'. Wie weiter aus Fig. 2 ersichtlich ist, ist in das Pumpengehäuse 6' eine Ringnut 9 als Ausgleichsmittel eingebracht, welche einen Exzenterraum 2.1 des Exzenterlagers 2 vergrößert.

Im dargestellten Ausführungsbeispiel weist die Ringnut 9 einen eckigen Querschnitt auf. Bei einer alternativen nicht dargestellten Ausführungsform kann die Ringnut 9 einen runden Querschnitt aufweisen.

Die erfindungsgemäßen Ausgleichsmittel 9 vermeiden in vorteilhafter Weise enge Spalten im Exzenterraum 2.1 des Exzenterlagers 2, wodurch eine Kapillarwirkung auf eine entstehende Leckageflüssigkeit unterbunden und eine Unterbrechung des in Fig. 1 dargestellten Leckagepfads 8 der Leckageflüssigkeit zwischen dem Exzenterraum 2.1 und dem elektrischen Antriebsmotor 5 bewirkt wird. Die Ausgleichsmittel 9 bewirken vielmehr ein Ablaufen der Leckageflüssigkeit in ein Leckagereservoir 10, welches im dargestellten Ausführungsbeispiel am Boden einer Motorbohrung 6.1 im Pumpengehäuse 6' angeordnet ist.

Das Ablaufen der Leckageflüssigkeit ist in Fig. 3 durch einen schwarzen Pfeil dargestellt. Somit gelangt die Leckageflüssigkeit in der erfindungsgemäßen Pumpe 1' nicht in das Exzenterlager 2 und von dort über das Antriebslager 3 in den elektrischen Antriebsmotor 5, sondern läuft in der Motorbohrung 6.1 nach unten und kann in das Leckagereservoir 10 abgeführt werden.

In der erfindungsgemäßen Pumpe 1' wird verhindert, dass eine Leckageflüssigkeit, z.B. Bremsflüssigkeit, welche von den Pumpenelementen austritt, in das Exzenterlager 2 eintritt und dann weiter in den elektrischen Antriebsmotor 5 transportiert wird. Hierdurch wird die Robustheit des Systems gegenüber Bremsflüssigkeitseintrag und damit die Lebensdauer des elektrischen Antriebsmotors 5, des Exzenterlagers 2 und des Antriebslagers 3 signifikant erhöht.

Die erfindungsgemäße Pumpe kann beispielsweise in einem Hydraulikaggregat eines ABS-System und/oder einem ESP-System verwendet werden.

## Patentansprüche

1. Pumpe mit einem Exzenterlager (2), einem Antriebslager (3), einer Antriebswelle (4), einem elektrischen Antriebsmotor (5) und einem Pumpengehäuse (6'), in das Ausgleichsmittel (9) eingebracht sind, welche einen Exzenterraum (2.1) des Exzenterlagers (2) vergrößern, **dadurch gekennzeichnet,**
**dass** die in das Pumpengehäuse (6') eingebrachte Ausgleichsmittel (9), die als Ringnut ausgeführt sind und verhindern, dass Leckageflüssigkeit, die aus einem Pumpenelement austritt, durch Kapillarwirkung in das Exzenterlager (2) eintritt und dann weiter in den elektrischen Antriebsmotor (5) transportiert wird indem die Ausgleichsmittel (9) eine Unterbrechung eines Leckagepfads einer Leckageflüssigkeit zwischen dem Exzenterraum (2.1) und dem elektrischen Antriebsmotor (5) und ein Ablaufen der Leckageflüssigkeit in ein Leckagereservoir (10) bewirken, wobei das Leckagereservoir (10) am Boden einer Motorbohrung (6.1) im Pumpengehäuse (6') angeordnet ist.

2. Pumpe nach Anspruch 1, **dadurch gekennzeichnet, dass** die Ringnut (9) einen eckigen oder einen runden Querschnitt aufweist.

3. Pumpe nach Anspruch 1 oder 2, **dadurch gekennzeichnet, dass** die Pumpe (1') in einem Hydraulikaggregat eines ABS-Systems und/oder eines ESP-Systems verwendbar ist.

## Claims

1. Pump, with an eccentric bearing (2), with a drive bearing (3), with a drive shaft (4), with an electric drive motor (5) and with a pump casing (6') into which are introduced compensating means (9) which enlarge an eccentric space (2.1) of the eccentric bearing (2), **characterized in that** the compensating means (9) introduced into the pump casing (6') are designed as an annular groove and prevent leakage fluid, which emerges from a pump element, from entering the eccentric bearing (2) as a result of capillary action and from then being transported further on into the electric drive motor (5), **in that** the compensating means (9) cause an interruption in the leakage path of a leakage fluid between the eccentric space (2.1) and the electric drive motor (5) and a run-off of the leakage fluid into a leakage reservoir (10), the leakage reservoir (10) being arranged at the bottom of a motor bore (6.1) in the pump casing (6').

2. Pump according to Claim 1, **characterized in that** the annular groove (9) has an angular or round cross section.

3. Pump according to Claim 1 or 2, **characterized in that** the pump (1') can be used in a hydraulic assembly of an ABS system and/or of an ESP system.

## Revendications

1. Pompe comprenant un palier d'excentrique (2), un palier d'entraînement (3), un arbre d'entraînement (4), un moteur d'entraînement électrique (5) et un boîtier de pompe (6'), dans lequel sont incorporés des moyens de compensation (9) qui augmentent un espace d'excentrique (2.1) du palier d'excentrique (2), **caractérisée en ce que** les moyens de compensation (9) incorporés dans le boîtier de pompe (6') sont réalisés sous forme de rainure annulaire et empêchent que du liquide de fuite, qui sort d'un élément de pompe, pénètre par effet capillaire dans le palier d'excentrique (2) et soit alors encore transporté dans le moteur d'entraînement électrique (5), les moyens de compensation (9) provoquant à cet effet une interruption du chemin de fuite d'un liquide de fuite entre l'espace d'excentrique (2.1) et le moteur d'entraînement électrique (5) et une évacuation du liquide de fuite dans un réservoir de fuite (10), le réservoir de fuite (10) étant disposé au fond d'un alésage du moteur (6.1) dans le boîtier de pompe (6').

2. Pompe selon la revendication 1, **caractérisée en ce que** la rainure annulaire (9) présente une section transversale polygonale ou ronde.

3. Pompe selon la revendication 1 ou 2, **caractérisée en ce que** la pompe (1') peut être utilisée dans un groupe hydraulique d'un système ABS et/ou d'un système EPS.
